Europäisches Patentamt

European Patent Office

Office européen des brevets

(11) Publication number: **0 092 420**
**A1**

# EUROPEAN PATENT APPLICATION

(21) Application number: 83302199.1

(22) Date of filing: 19.04.83

(51) Int. Cl.³: **G 11 B 7/14**

(30) Priority: 19.04.82 US 369456
19.04.82 US 369457

(43) Date of publication of application: 26.10.83
Bulletin 83/43

(84) Designated Contracting States: **DE FR NL**

(71) Applicant: **XEROX CORPORATION, Xerox Square - 020,
Rochester New York 14644 (US)**

(72) Inventor: **Knight, Gordon, 10407 Anson Avenue,
Cupertino California 95014 (US)**
Inventor: **Scifres, Donald R., 1337 Montclair Way, Los
Altos California 94022 (US)**
Inventor: **Streifer, William, 263 Fairfield Court, Palo Alto
California 94306 (US)**

(74) Representative: **Weatherald, Keith Baynes et al,
European Patent Attorney Rank Xerox Limited Patent
Department 338 Euston Road, London NW1 3BH (GB)**

(54) Information storage systems.

(57) An optical memory system in which plural data tracks, or plural areas of a single data track, of the optical memory are recorded simultaneously by a system including an integrated injection diode laser array. Each laser of the array (2) has its own drive and is separately modulated. Flat field collector and objective lenses image the points of light eminating form the plane of the broad emitting surface of the laser array (2) onto the optical memory (14) without defocusing. Placement of the longitudinal axis of the emitting surface transverse to the desired positions of the data tracks of the optical memory (14) will provide data tracks separated by the corresponding separation between the lasers of the array (2) (assuming a 1 to 1 optical system), with increased track density being achieved by orienting the longitudinal axis of the emitting surface of the array (2) at a non-transerse angle to the desired positions of the data tracks. Plural areas of one data track can be recorded simultaneously by having the longitudinal axis of the emitting surface of the array (2) aligned directly over the desired position of that data track, with this alignment also providing a system that is not duty cycle limited. Since uniform output from all lasers of an array (2) is difficult to achieve, each laser output can be monitored (such as by monitoring its back facet output by an associated on-chip detector) so that each output is adjusted by a feedback circuit. For plural track readout, drives for the lasers of the array (2) would be reduced so that the lasers operate CW. Since the laser array (2) is solid state in nature the proposed system does not suffer from the relative ositional instabilities found in a system using plural gas lasers and, accordingly, the plural write beams would be maintained in desired alignment. In addition, the input bandwidth of the optical memory system would be increased significantly.

## INFORMATION STORAGE SYSTEMS

Digital optical memories are now being seriously considered as potential alternatives to magnetic tape and disk memories. The conventional optical memory practice (U.S. Patent 4,283,777) is to selectively record or write one data track, or channel, at a time by means of an optical system utilizing a single gaseous laser source and associated acousto-optic modulator. Such recording is sufficient for some purposes, but imposes severe limitations on the input bandwidth of such a memory. Utilizing plural gas lasers, each with its own optical path and acousto-optic modulator, to simultaneously write a plurality of data tracks, or simultaneously write a plurality of areas of one data track, would reduce the input bandwidth limitation. However, with such a system it is difficult to keep the write beams properly aligned due to relative instabilities in the positions of the lasers, the modulators, and other components of the optical path. Accordingly, there is a need for a plural track, or plural track area, optical memory write system that does not suffer from the instabilities inherent in systems uiltizing a plurality of gas lasers, each with its own optical path and acousto-optic modulator.

Accordingly, there is disclosed an optical memory system in which plural data tracks, or plural areas of a single data track, of the optical memory are recorded simultaneously by a system including an integrated injection diode laser array. Each laser of the array has its own drive and is separately modulated. Flat field collector and objective lenses image the points of light emanating from the plane of the broad emitting surface of the laser array onto the optical memory without defocusing. Placement of the longitudinal axis of the emitting surface transverse to the desired positions of the data tracks of the optical memory will provide data tracks separated by the corresponding separation between the lasers of the array (assuming a 1 to 1 optical system), with increased track density being achieved by orienting the longitudinal axis of the emitting surface of the array at a non-transverse angle to the desired positions of the data tracks. Plural areas of one data track can be recorded simultaneously by having the longitudinal axis of the emitting surface of the array aligned directly over the desired position of that data track, with this alignment also providing a system that is not duty cycle limited. Since uniform output from all lasers of an array is difficult to achieve, each laser output can be monitored (such as by monitoring its back facet output by an associated on-chip detector) so that each output is adjusted by a feedback circuit. For plural track readout, drives for the lasers of the array would be reduced so that the lasers operate CW. Since the laser array is solid state in nature, the proposed system does not suffer from the relative positional instabilities found in a system using plural gas lasers and, accordingly, the plural write beams would be maintained in desired alignment. In addition, the input bandwidth of the optical memory system would be increased significantly.

The invention is illustrated, by way of example, in the accompanying drawings, in which:

Figure 1 is a perspective view of the information storage system of the invention.

Figure 2 is a top view of the system of Figure 1.

Figures 3, 4 and 6 show different orientations of the laser array of the system of Figure 1 relative to the recording medium of that system.

Figure 5 shows the duty cycle of a diode laser.

Figures 7 and 8 show different orientations of plural laser arrays relative to a recording medium.

Figure 9 is a side view of a laser array.

Figure 10 shows a system for producing separate read and write beams from a common beam.

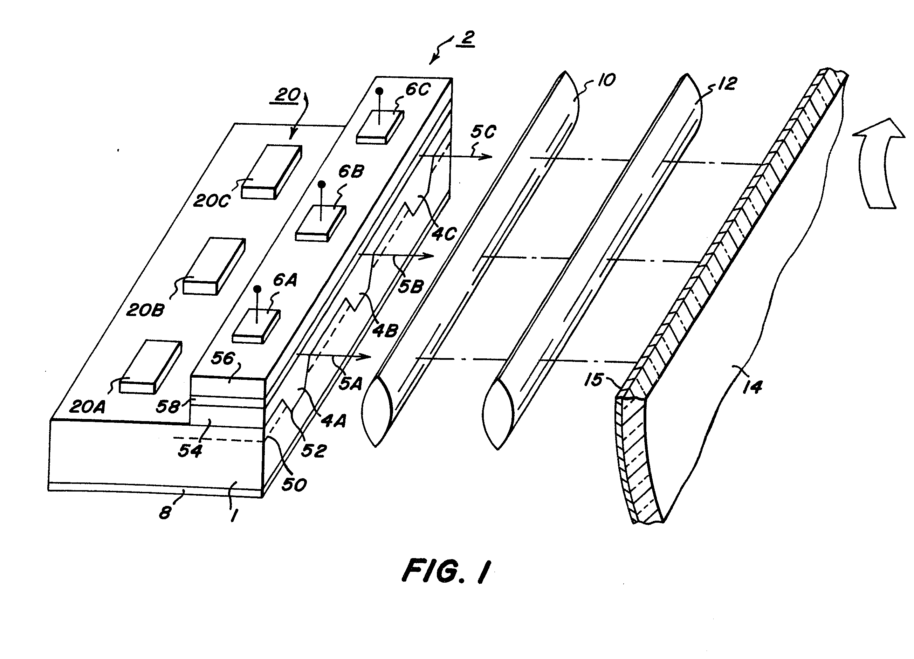

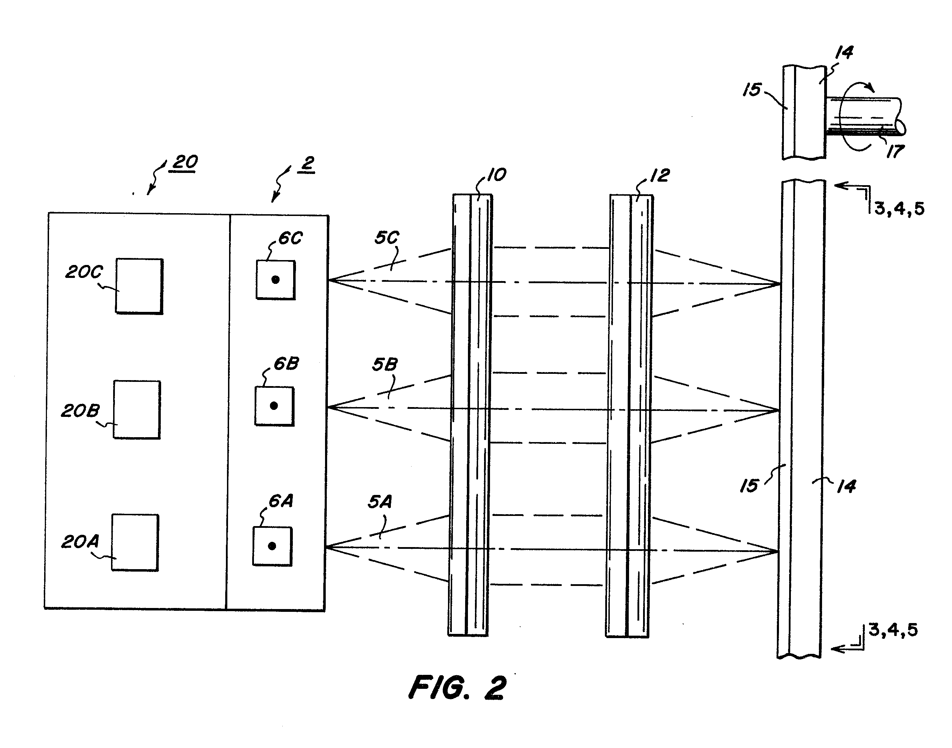

Referring to Figures 1 and 2, the multi-beam writing and reading optical memory system of the invention includes a linear diode laser array 2 comprised of a plurality of injection diode lasers 4A, 4B, 4C which can be of the channeled substrate type, each comprised of a portion of the substrate 1, a pump current confining junction 50, a channel 52 through a portion of junction 50, guiding layers 54 and 56, and an active region 58, such as described in United States Patent. 4,099,999, with each laser having its own modulated current drive provided by electrodes 6A, 6B, 6C acting in

0092420

-3-

conjunction with substrate electrode 8. As explained hereinafter, lasers 4A, 4B, 4C are driving in the pulse regime for writing and in the CW regime for reading.

Flat field (cylindrical) collector and objective lenses 10 and 12, respectively, are positioned between the emitting surfcae 3 of the laser array 2 and a threshold sensitive recording medium 14. Typically, the recording medium 14 is a removeable disk which is rotated (by means not shown) during operation about the axis of spindle 17 at an essentially constant angular velocity relative to stationary laser array 2. As best seen in Figure 2, flat field collector lens 10 collimates the diverging light beams 5a, 5b, 5c from lasers 4a, 4b, 4c, respectively, of the laser array 2, and flat field objective lens 12 focuses the collimated beams 5a, 5b, 5c upon the recording or storage medium 14. Preferably, collector lens 10 and objective lens 12 are matched so that a 1 to 1 optical system is provided. In keeping with accepted practice, the objective lens 12 can be moved back and forth relative to recording medium 14 by a servo controlled voice coil (not shown) so that the beams 5A, 5B, 5C are sharply focused at the recording medium 14.

Recording medium 14 is any light level threshold sensitive recording material. For example, recording medium 14 suitably comprises an ablatable tellerium based, reflective film 15 which is coated on an optically transparent substrate, such a glass or plastic. In that event, the pulse output power of each of the lasers 4a, 4b, 4c, as controlled by modulation of the currents applied to electrodes 6a, 6b, 6c, respectively, is selected so that the intensity of the pulse beams 5a, 5b, and 5c when writing, as measured at the surface of the film 15, swing above and below a predetermined ablation threshold level for the film as a function of the modulation. Consequently, the beams 5a, 5b, 5c, when writing, open small holes in film 15, or otherwise change the physical nature of portions of the film, for example, by modifying its absorption, reflectivity, or polarization properties, with such holes or changes representing the binary data which is to be recorded. In contrast, during reading, the output power of each of the lasers 4a, 4b, 4c is reduced to ensure that the intensity of the CW beams 5a, 5b, 5c remain well below the ablation threshold of the film 15. Thus, the CW beams 5a, 5b, 5c do not affect the optical properties of the film 15 but are reflected therefrom after being intensity modulated in accordance with any prerecorded data they happen to scan. Detection of the reflected read beams is handled in a conventional manner by, for example, a detector array (not shown) as taught in the aforenoted patent.

The disclosed laser array optical memory write/read system has positional and stability advantages not provided by systems using dual gas lasers with separate optical paths. Since the lasers 4a, 4b, 4c are formed by photolithographic means, the relative separation between the lasers can be very closely controlled, and, due to the solid state nature of the array, that relative separation will remain constant. Also, since the outputs of all of the lasers are conveyed to the layer 15 by the same optical system (flat field lenses 10 and 12), instability due to relative movement between optical components in different optical paths is greatly reduced.

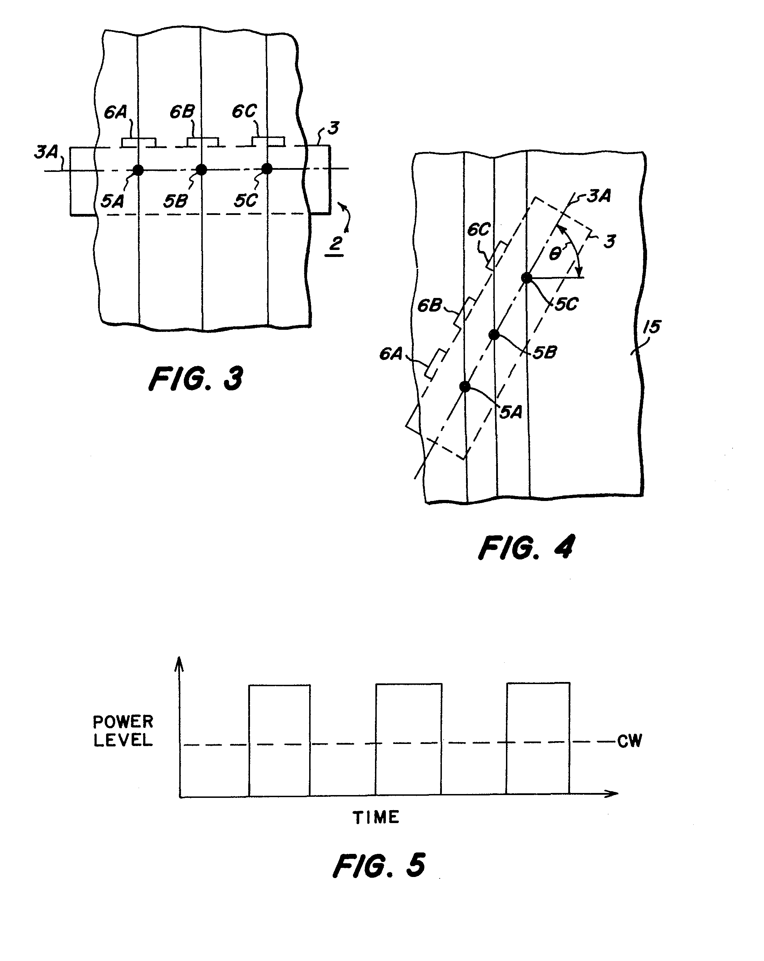

As shown in Figure 3, the longitudinal axis 3a through the emission areas of beams 5a, 5b and 5c is transverse to the desired positions of the data tracks to be written on the film 15. Accordingly, with the laser array 2 in the position shown in Figure 3, the data track separation, or pitch, would be equal to the corresponding separation between the lasers of the array modified by the magnification of the optical system. Conventional photolithographic techniques for laser production can provide a laser array with laser separation as low as 10-20 microns, but electrical and thermal crosstalk limit laser separation to about 50-100 microns. Thus, a practical laser array oriented as shown in Figure 3 can write parallel data tracks with a minimum separation or pitch of about 50-100 microns.

In most instances, it is desired that the data track separation be significantly less than what can be provided by the laser array orientation shown in Figure 3, that is, a data track separation less than 50-100 microns is generally desired. To decrease the data track separation while still writing a plurality of adjacent data tracks simultaneously, the longitudinal axis 3a of the laser array 2 is positioned so that that axis is no longer transverse to the desired positions of the data tracks, as shown in Figure 4 where longitudinal axis 3a is oriented such that it makes an acute angle $\theta$ with the desired positions of adjacent data tracks. The larger the angle $\theta$ (but less than $\theta = 90o$), the greater the track density that can be achieved.

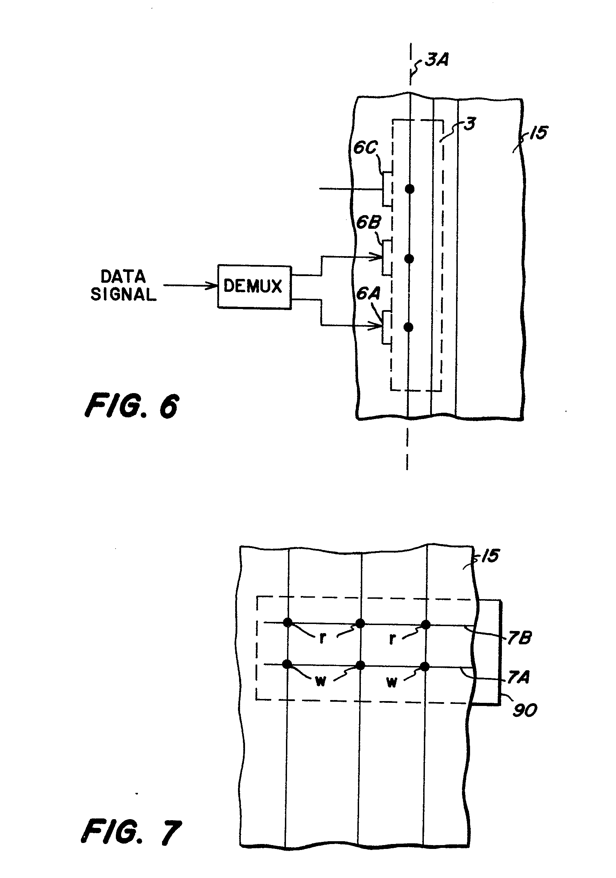

Solid state lasers are often duty cycle limited, that is, they can produce peak power pulses only during a portion of the excitation cycle, as shown in Figure 5, where each peak power pulse is followed by an output below the CW level. Since writing can only be achieved at or near peak power, the rate at which data spots can be recorded; i.e., the data rate, is low. Increased data rate is provided by orienting the longitudinal axis 3a of the laser array 2 such that it is vertically aligned with the portion of a single data track to be written, as shown in Figure 6. In that orientation, the input binary data signal for the data track to be written is supplied, for example, to a conventional 1 to 2 demultiplexer 80 which samples the data signal at the data signal clock rate and outputs every other sample to a different one of the electrodes 6a and 6b. Now, lasers 4a and 4b are alternatively pulsed at one half the clock rate and at about two times the output power level used in the embodiments of Figures 3 and 4 for about one-half the on-time of those embodiments, or at some other power level-on time combination, such that the lasers 4a and 4b operate at about the same average output power as they do in the embodiments of Figures 3 and 4. Such pulsing allows for interleaving of the power sources for successive data spots of the data track, that is, one of the lasers 4a and 4b writes every other data spot of a data track. Using a different power source to write alternate data spots makes it possible to achieve higher data rates since the recording medium 14 can be spun at at least twice the normal rotation speed of the embodiments of Figures 3 and 4.

The laser array orientation shown in Figure 6 is applicable also to systems needing backup capabilities for system reliability. Although diode lasers are expected to have substantial longevity, there are instances of failure. Referring again to Figure 6 in which only laser 4a and 4b are normally driven, system reliability is increased significantly by sensing whether lasers 4a and 4b are operating normally, such as by monitoring the rear facet output as subsequently discussed, and, if a failure is detected, the signal supplied to the failed laser would instead be supplied to laser 4c by simply electronically changing the data stream timing, such as by a delay line, so that laser 4c would write (or read) in exactly the same track position as the failed laser. Thus, no physical laser repositioning is necessary upon laser failure and no system downtime would be incurred.

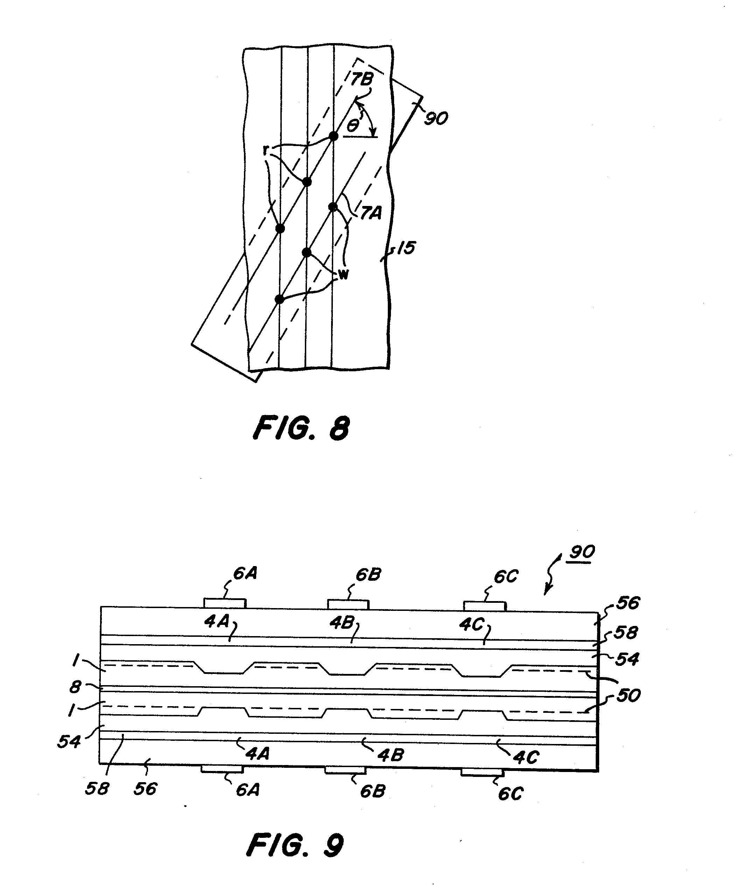

In many applications, it is advantageous to ascertain immediately after recording whether data has been accurately recorded on the recording medium. Accordingly, systems have been suggested in which one laser is used to record data and another laser is used to immediately read the recorded data. When plural data tracks are recorded simultaneously, the read after write capability can be achieved by a two-dimensional laser array 90 comprised of two parallel rows of lasers producing two parallel rows of laser light spots. Referring to Figure 7, the longitudinal axes 7a and 7b through the emission areas of the laser rows would be transverse to the desired positions of the data tracks to be written (as discussed in relation to Figure 3), with one row of lasers (those on axis 7a) of the two dimensional array being driven in the pulse regime to produce write spots "w" and the other row of lasers (those on axis 7b) of the two dimensional array being driven in the CW regime to produce read spots "r" positioned forward of the read spots in the direction of rotation of the recording medium 14. Detection of the reflected read spots or beams is handled in a conventional manner by, for example, the detector array taught in the aforementioned patent. Referring to Figure 8, to reduce the separation betweeen adjacent data tracks, the longitudinal axes 7A and 7B through the emission areas of the laser rows of array 90 would be positioned so that those axes are no longer normal to the positions of the desired data tracks (as discussed in relation to Figure 4). Once again, the larger the angle 0, the greater the data track density that can be achieved.

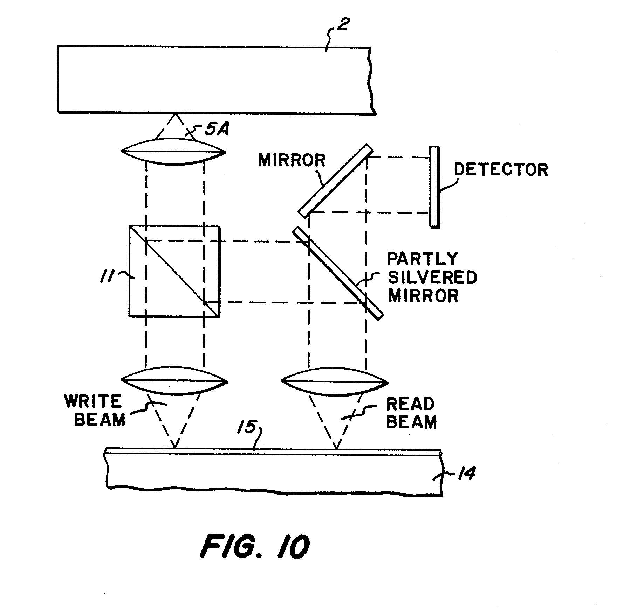

The two-dimensional laser array 90 can be provided by coupling two separate linear arrays of lasers, each of the type shown in Figure 1, very close to each other or abutting each other as shown in Figure 9. The two-dimensional laser array can be obtained in other ways, such as, for example, by growing such an array on a common substrate with the

-7-

substrate being stepped to provide two-dimensionality, or by passing the emissions from a one-dimensional array through a prism or a beam splitter to provide read beams having an optical path offset from the optical path of the write beams as shown in Figure 10 where, for simplicity, only one laser beam 5a and only one beam splitter 11 with associated mirrors and detector are shown. In the embodiment illustrated in Figure 10, about five percent (5%) of the write beam energy is utilized as the read beam, with the write beam being pulsed to high power to write and being left on at low CW power at all other time including when reading.

In Figures 3, 4, 6 7 and 8 the data tracks are depicted, for simplicity, as straight lines. In actuality they are small arcs of circles or portions of a spiral depending upon whether the data is recorded in a plurality of concentric tracks configuration or in a continuous spiral track configuration.

Since it is difficult to fabricate a laser array in which the light output of each laser is uniform, each laser output can be monitored so that each output can be adjusted to a uniform level by an appropriate feedback circuit. Referring again to Figure 1, such adjustment is achieved, for example, by a Schottky detector array 20, each rectangular-shape detector 20a, 20b, 20c of the array being located adjacent the rear facet of a different one of the lasers 4a, 4b, 4c of the laser array 2. The Schottky detectors 20a, 20b, 20c can be formed by a Cr/Au/Sn/Au metalization of the silicon substrate 1 through an appropriate shadow mask. Details of the formation of the Schottky detector array 20 are set forth in "Integrated Output Power Detector for AlGaAs Laser Array", by Scifres et al, I.E.E.E. Journal of Quantum Electronics, Volume QE-16, No. 5, May, 1980. In principle, each Schottky detector receives light from the rear facet of its associated laser, with each Schottky detector signal being an input to an operational amplifier feedback circuit which adjusts the laser drive curent, thus maintaining a uniform light output signal level for all the lasers of the array 2.

**CLAIMS:**

1.     An information storage system including

a storage medium (14) including a light level threshold sensitive recording material (15), onto which data tracks are to be positionally recorded;

a semiconductor diode laser array (2) including a plurality of linearly aligned injection diode lasers on a common semiconductor substrate;

means (6) for supplying a different drive signal to at least some of said lasers of said array to provide for emission of a plurality of beams from said array; and

optical (10, 12) means for focusing said plurality of beams upon said recording material;

wherein a line (3A) through said focused beams either extends along a portion of one data track or intercepts two or more data tracks.

2.     A system as claimed in claim 1,

wherein the line through said focused beams is aligned with a portion of a data track to be recorded.

3.     The system of Claim 2 further including means for sampling said input signal at the data signal clock rate and supplying different portions of said input signal to said drive means for said lasers whereby a higher data recording rate is achieved.

4.     The system of Claim 2 wherein at least one of said diode lasers is normally inoperative, said at least one of said diode lasers being rendered operative upon failure of another of said diode lasers.

5.     An information storage system with read after write capabilities including

a storage medium (14) including a light level threshold sensitive recording material (15) onto which data tracks are to be positionally recorded in accordance with an input data signal;

at least two seminconductor diode laser arrays (90) each including a plurality of linearly aligned injection diode lasers;

0092420

- 2 -

drive means for supplying a different drive signal to at least some of said lasers of each of said arrays to provide for emission of a plurality of beams from each of said arrays; and

optical means (10, 12) for focusing said beams upon said recording material;

wherein the drive signals to the lasers of one of said arrays are pulse information modulated signals and the drive signals to the lasers of said other of said arrays are continuous wave signals; and

wherein a line through the focused light beams of each of said arrays is at an angle which is not normal to the desired positions of said data tracks.

6. The system of Claim 5 wherein each of said arrays is formed on a different substrate.

7. The system of Claim 5 wherein said arrays are formed on a common substrate.

8. The system of any preceding claim, wherein said optical means includes a collimating lens and a focusing lens.

9. The system of any preceding claim, wherein said diode lasers are of the channeled substrate type.

FIG. I

FIG. 2

0092420

**FIG. 3**

**FIG. 4**

**FIG. 5**

FIG. 6

FIG. 7

**FIG. 8**

**FIG. 9**

FIG. 10

| | DOCUMENTS CONSIDERED TO BE RELEVANT | . | EP 83302199.1 |
|---|---|---|---|

| Category | Citation of document with indication. where appropriate, of relevant passages | Relevant to claim | CLASSIFICATION OF THE APPLICATION (Int. Cl. 3) |
|---|---|---|---|
| X | US - A - 4 298 974 (TSUNODA et al.)<br>* Fig. 2-6; abstract * | 1-5;7-9 | G 11 B 7/14 |
| A | DE - A1 - 2 734 257 (PHILIPS')<br>* Fig. 11-16; claim 3 * | 1-5,7-9 | |
| A | DE - A1 - 2 625 359 (HITACHI)<br>* Page 10; fig. 5,6; claim 7 * | 1-5,7-9 | |
| A | DE - A1 - 2 607 705 (HITACHI)<br>* Claims; fig. 1-5 * | 1-5,7-9 | |
| | ---- | | |
| | | | TECHNICAL FIELDS SEARCHED (Int. Cl. 3) |
| | | | G 11 B 7/00 |

The present search report has been drawn up for all claims

| Place of search | Date of completion of the search | Examiner |
|---|---|---|
| VIENNA | 23-06-1983 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82